# EUROPEAN PATENT APPLICATION

(11) **EP 4 751 826 A1**
(43) Date of publication of application: **03.06.2026**
(21) Application number: 24907156.4
(22) Date of filing: 04.12.2024
(51) Int. Cl.: B23B 3/16, B23B 1/00, B23B 15/00, B23B 19/02, B23B 23/00

(54) **MACHINE TOOL, WORKPIECE MACHINING METHOD, AND CONTROL PROGRAM**

(30) Priority: 21.12.2023 JP 2023216028
(71) Applicant: DMG Mori Co., Ltd., Nara-shi, Nara 630-8122 (JP)
(72) Inventor: KURIYA, Tatsuhiko, Nara City, Nara 630-8122 (JP)
(74) Representative: Isarpatent
(86) International application number: PCT/JP2024/042827
(87) International publication number: WO 2025/134769

(57) **Abstract**

A machine tool includes: a tool rest (31) having a holder (36) that can hold a workpiece; a tool spindle (41); and a controller (51) that controls the machine tool. The controller (51) controls the tool spindle (41) to machine the workpiece to obtain an intermediate machined workpiece (W') including a first portion (160), a second portion (170), and a coupling portion (180) that couples the first portion (160) and the second portion (170), controls the tool rest (31) to hold the first portion (160) by the holder (36), and controls the tool spindle (41) to cut the coupling portion (180), with the first portion (160) held by the holder (36).

## Description

### TECHNICAL FIELD

The present invention relates to a machine tool, a method for machining a workpiece, and a control program.

### BACKGROUND ART

For example, Japanese Patent No. 7033240 (PTL 1) discloses a machine tool including: a tool spindle; a first spindle and a second spindle that hold a workpiece; and a multi-articulated robot for transporting an object to be machined (workpiece). The workpiece is machined such that a necessary portion constituting a finished component and a frame-shaped unnecessary portion to which the necessary portion is coupled through a plurality of coupling portions are provided in the workpiece. Furthermore, by cutting the coupling portions, with the workpiece gripped by a hand of the multi-articulated robot, the necessary portion is separated from the unnecessary portion.

### CITATION LIST

### PATENT LITERATURE

PTL 1: Japanese Patent No. 7033240

### SUMMARY OF INVENTION

### TECHNICAL PROBLEM

In the machine tool disclosed in PTL 1 above, the workpiece is gripped by the hand of the multi-articulated robot during cutting of the coupling portions. However, when the rigidity of the multi-articulated robot or the workpiece gripping force by the hand is insufficient, a machining point of the workpiece by a tool may be positionally displaced or the workpiece may fall from the hand during cutting of the coupling portions.

An object of the present invention is to provide a machine tool, a method for machining a workpiece, and a control program, which allow an intermediate machined workpiece including a first portion, a second portion, and a coupling portion that couples the first portion and the second portion to smoothly undergo cutting of the coupling portion.

### SOLUTION TO PROBLEM

A machine tool according to the present invention includes: a tool rest having a holder that can hold a workpiece; a tool spindle; and a controller that controls the machine tool. The controller controls the tool spindle to machine the workpiece to obtain an intermediate machined workpiece including a first portion, a second portion, and a coupling portion that couples the first portion and the second portion, controls the tool rest to hold the first portion by the holder, and controls the tool spindle to cut the coupling portion, with the first portion held by the holder.

A method for machining a workpiece according to the present invention includes: machining the workpiece to obtain an intermediate machined workpiece including a first portion, a second portion, and a coupling portion that couples the first portion and the second portion; holding the first portion by a holder mounted on a tool rest; and cutting the coupling portion, with the first portion held by the holder.

A control program according to the present invention is a control program for a machine tool including a tool rest. The control program causes the machine tool to perform: machining a workpiece to obtain an intermediate machined workpiece including a first portion, a second portion, and a coupling portion that couples the first portion and the second portion; holding the first portion by a holder mounted on the tool rest; and cutting the coupling portion, with the first portion held by the holder.

### ADVANTAGEOUS EFFECTS OF INVENTION

According to the present invention, it is possible to provide a machine tool, a method for machining a workpiece, and a control program, which allow an intermediate machined workpiece including a first portion, a second portion, and a coupling portion that couples the first portion and the second portion to smoothly undergo cutting of the coupling portion.

### BRIEF DESCRIPTION OF DRAWINGS

Fig. 1 is a front view showing a machine tool according to an embodiment of the present invention.
Fig. 2 is a perspective view showing cutting of a coupling portion of an intermediate machined workpiece in the machine tool in Fig. 1.
Fig. 3 is a block diagram showing a control system of the machine tool in Fig. 1.
Fig. 4 is a flowchart showing a flow of workpiece machining using the machine tool in Fig. 1.
Fig. 5 is a front view schematically showing a first step of workpiece machining using the machine tool in Fig. 1.
Fig. 6 is a front view schematically showing a second step of workpiece machining using the machine tool in Fig. 1.
Fig. 7 is a front view schematically showing a third step of workpiece machining using the machine tool in Fig. 1.
Fig. 8 is a front view schematically showing a fourth step of workpiece machining using the machine tool in Fig. 1.
Fig. 9 is a front view schematically showing a fifth step of workpiece machining using the machine tool in Fig. 1.
Fig. 10 is a front view schematically showing a sixth step of workpiece machining using the machine tool in Fig. 1.

### DESCRIPTION OF EMBODIMENTS

An embodiment of the present invention will be described with reference to the drawings. In the drawings referred to below, the same or corresponding members have the same reference numerals allotted.

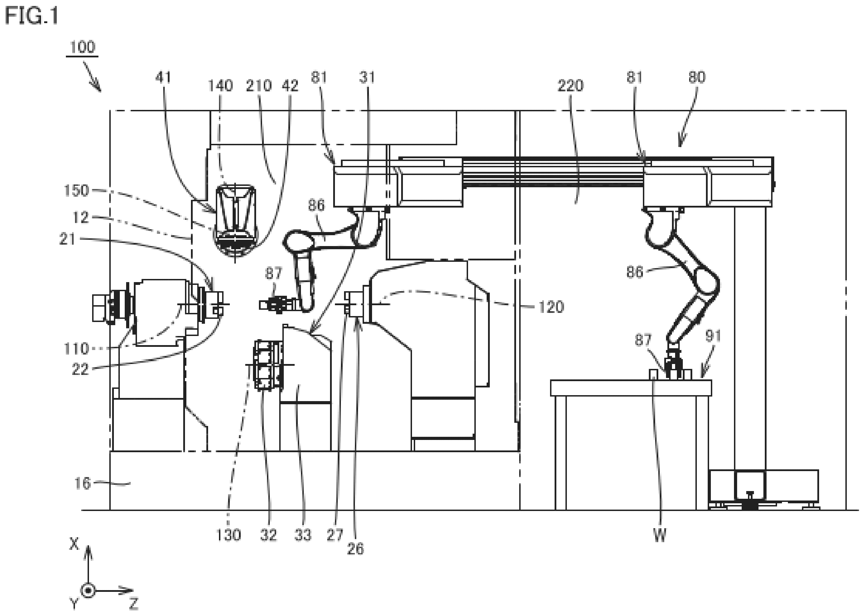

Fig. 1 is a front view showing a machine tool according to an embodiment of the present invention. In Fig. 1, a cover body forming the external appearance of the machine tool is seen through to show the interior of the machine tool.

Referring to Fig. 1, a machine tool 100 is a multi-tasking machine having both a milling function of performing workpiece machining by bringing a rotating tool into contact with a stationary workpiece and a turning function of performing workpiece machining by bringing a tool into contact with a rotating workpiece.

Machine tool 100 is a numerically controlled (NC) machine tool in which various operations for workpiece machining are automated through numerical control by a computer.

Herein, for convenience in explanation of a configuration of machine tool 100, an axis parallel to a rotation axis of a workpiece and extending in the horizontal direction will be referred to as "Z axis", an axis orthogonal to the Z axis and extending in the horizontal direction will be referred to as "Y axis", and an axis extending in the up-down direction will be referred to as "X axis".

Machine tool 100 has a bed 16, a workpiece spindle 21, an opposing workpiece spindle 26, a tool spindle 41, a tool rest 31, and a cover body 12. Workpiece spindle 21, opposing workpiece spindle 26, tool spindle 41, and tool rest 31 are disposed in a machining area 210. Machining area 210 is a space where workpiece machining is performed, and is hermetically sealed by cover body 12 to prevent foreign substances such as chips or cutting oil caused by workpiece machining from leaking to the outside of machining area 210.

Bed 16 is a base member for supporting workpiece spindle 21, opposing workpiece spindle 26, tool spindle 41, tool rest 31 and the like, and is installed on a floor surface of a factory or the like. Bed 16 is made of metal such as cast metal.

Workpiece spindle 21 and opposing workpiece spindle 26 can hold a workpiece. Workpiece spindle 21 is driven by a motor to rotate about a rotation center axis 110 parallel to the Z axis. Workpiece spindle 21 has a plurality of claw portions 22 and is provided with a chuck mechanism for detachably holding the workpiece. Each claw portion 22 is driven by hydraulic pressure or the like to slide in a radial direction of rotation center axis 110. The plurality of claw portions 22 slide inward in the radial direction of rotation center axis 110 to grip an outer circumferential surface of the workpiece, and slide outward in the radial direction of rotation center axis 110 to grip an inner circumferential surface of the workpiece.

Opposing workpiece spindle 26 is disposed to face workpiece spindle 21 in the Z-axis direction. Opposing workpiece spindle 26 is driven by a motor to rotate about a rotation center axis 120 parallel to the Z axis and extending in line with rotation center axis 110. Opposing workpiece spindle 26 has a plurality of claw portions 27 and is provided with a chuck mechanism for detachably holding the workpiece. The plurality of claw portions 27 correspond to the plurality of claw portions 22 of workpiece spindle 21.

Workpiece spindle 21 is fixed to bed 16. Opposing workpiece spindle 26 can move in the Z-axis direction by various types of feed mechanisms, guide mechanisms and motors.

Tool spindle 41 can hold a tool. Tool spindle 41 is driven by a motor to rotate about a rotation center axis 140 parallel to the X axis in a reference posture described below. Tool spindle 41 incorporates a clamp mechanism (not shown) for detachably holding the tool.

Furthermore, tool spindle 41 can swivel about a swivel center axis 150 parallel to the Y axis (B-axis swiveling). Swivel center axis 150 intersects rotation center axis 140. A swivel range of tool spindle 41 is, for example, a range of ±120° with respect to the reference posture (posture of tool spindle 41 shown in Fig. 1) in which a spindle end surface 42 of tool spindle 41 faces downward.

Tool spindle 41 can move in the X-axis direction, the Y-axis direction and the Z-axis direction by various types of feed mechanisms, guide mechanisms and motors. Although not shown in Fig. 1, an automatic tool changer (ATC) for automatically changing a tool held by tool spindle 41 and a tool magazine for accommodating a replacement tool are provided around workpiece spindle 21.

Tool rest 31 can hold a tool. Tool rest 31 is provided below tool spindle 41. Tool spindle 41 is disposed on the upper side relative to rotation center axis 110 of workpiece spindle 21 and rotation center axis 120 of opposing workpiece spindle 26, and tool rest 31 is disposed on the lower side relative to rotation center axis 110 of workpiece spindle 21 and rotation center axis 120 of opposing workpiece spindle 26. Tool rest 31 is of a so-called turret type, to which a plurality of tools are radially attached and perform swivel indexing.

Tool rest 31 has a swivel portion 32 and a plurality of tool holders (not shown). Swivel portion 32 can swivel about a swivel center axis 130 parallel to the Z axis. Swivel portion 32 as a whole has a disc shape in which an axial direction of swivel center axis 130 corresponds to a thickness direction. The plurality of tool holders (not shown) can hold tools. The plurality of tool holders are attached to an outer circumferential surface of swivel portion 32. The plurality of tool holders are arranged in a circumferential direction of swivel center axis 130. When swivel portion 32 swivels about swivel center axis 130, the tools held by the tool holders move in the circumferential direction. A tool used for workpiece machining is indexed to a position having a prescribed angle in the circumferential direction of swivel center axis 130.

Machine tool 100 may further have an automatic tool changer for automatically changing a tool held by tool rest 31. In this case, tool rest 31 may incorporate a clamp mechanism for automatically clamping or unclamping the tool with automatic changing of the tool held by the tool holder. Tool rest 31 may also have a milling function for rotating the tool held by the tool holder.

Tool rest 31 can move in the X-axis direction and the Z-axis direction by various types of feed mechanisms, guide mechanisms and motors.

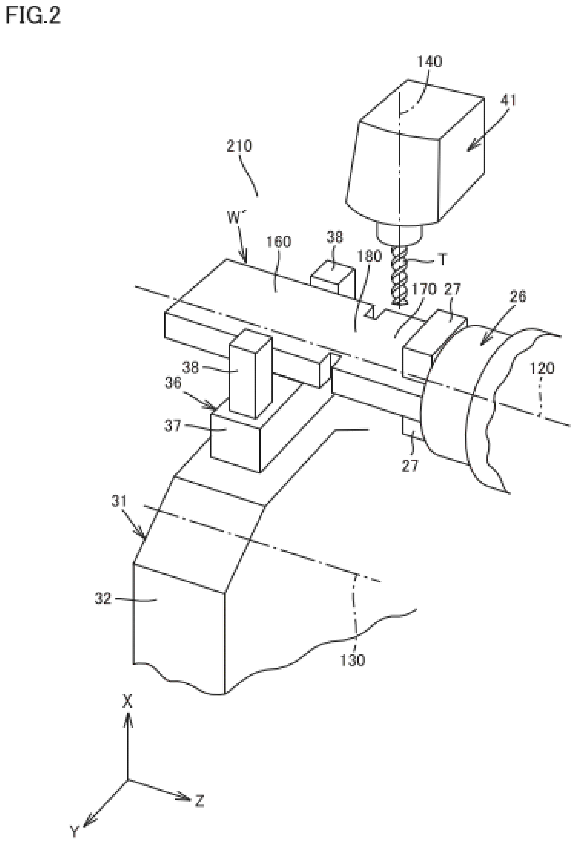

Fig. 2 is a perspective view showing cutting of a coupling portion of an intermediate machined workpiece in the machine tool in Fig. 1. Referring to Figs. 1 and 2, tool rest 31 further has a holder 36. Holder 36 can hold a workpiece. Holder 36 is attached to the outer circumferential surface of swivel portion 32. Holder 36 is arranged in the circumferential direction of swivel center axis 130 together with the plurality of tool holders.

Holder 36 is implemented by a clamp unit that automatically operates between a clamp state of clamping a workpiece and an unclamp state of unclamping a workpiece.

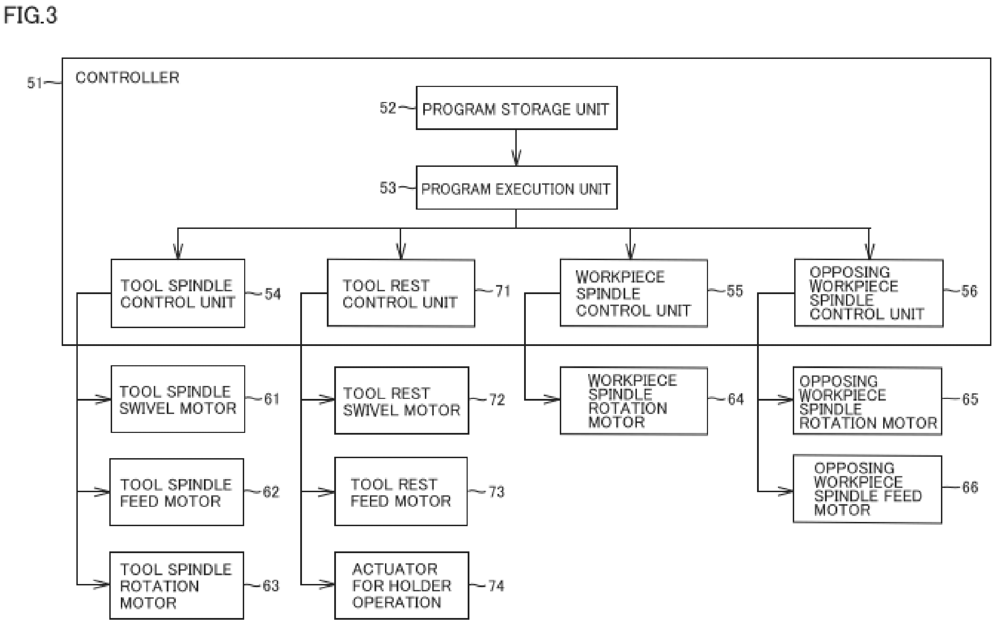

An example of a structure of holder 36 will be described. Holder 36 has a holder base 37 and a pair of gripping claws 38. The pair of gripping claws 38 are attached to holder base 37. The pair of gripping claws 38 face each other with a spacing therebetween. The pair of gripping claws 38 are guided to be slidable in a direction in which the pair of gripping claws 38 face each other. Holder base 37 incorporates an actuator (corresponding to an actuator 74 in Fig. 3) for causing the pair of gripping claws 38 to slide. A power source of the actuator is not particularly limited and may be, for example, a motor or a hydraulic cylinder.

When a workpiece is disposed between the pair of gripping claws 38 and the pair of gripping claws 38 slide in a direction in which the pair of gripping claws 38 come closer to each other, the clamp state of gripping the workpiece by the pair of gripping claws 38 is obtained. When the pair of gripping claws 38 slide in a direction in which the pair of gripping claws 38 move away from each other, the unclamp state of releasing gripping of the workpiece by the pair of gripping claws 38 is obtained.

Referring to Fig. 1, machine tool 100 further has a workpiece stocker 91 and a workpiece transporting mechanism 80. Workpiece stocker 91 is installed in an external area 220 outside machining area 210. Workpiece stocker 91 is adjacent to machining area 210 in the Z-axis direction. Workpiece stocker 91 can store a workpiece W before and after machining. Although a table on which workpiece W can be placed is shown as workpiece stocker 91 in Fig. 1, the type of workpiece stocker 91 is not particularly limited.

Workpiece transporting mechanism 80 is a mechanism for transporting workpiece W between machining area 210 and external area 220. Workpiece transporting mechanism 80 has a moving device 81 and a robot arm 86. In Fig. 1, moving device 81 and robot arm 86 that convey workpiece W into machining area 210, and moving device 81 and robot arm 86 that convey workpiece W into external area 220 are shown.

Moving device 81 can move between machining area 210 and external area 220. Moving device 81 moves robot arm 86 between machining area 210 and external area 220. Moving device 81 causes robot arm 86 to slide in the Z-axis direction. Moving device 81 is, for example, composed of a guide mechanism such as a linear guide, a feed mechanism such as a rack-and-pinion mechanism, and a power source such as a motor.

Robot arm 86 can hold workpiece W. As an end effector, a hand 87 for gripping workpiece W is attached to robot arm 86. Robot arm 86 is a multi-articulated robot and is, for example, a six-axis articulated robot that allows six-axis control.

Workpiece transporting mechanism 80 is not limited to the above-described configuration and may be, for example, a gantry loader including a hand that can grip a workpiece and a moving device for causing the hand to slide along an X axis and a Y axis.

Fig. 3 is a block diagram showing a control system of the machine tool in Fig. 1. Referring to Figs. 1 and 3, machine tool 100 further has a controller 51. Controller 51 controls machine tool 100.

Each component of controller 51 is realized by hardware including a computing unit such as a central processing unit (CPU) and various computer processors, a storage device such as memory or storage, and wired or wireless communication lines that connect these, and software that is stored in the storage device and supplies processing instructions to the computing unit. The computer programs may be composed of a device driver, an operating system, various application programs that are located at higher layers than these, or a library that provides common functions to these programs.

Controller 51 has a program storage unit 52, a program execution unit 53, a tool spindle control unit 54, a tool rest control unit 71, a workpiece spindle control unit 55, and an opposing workpiece spindle control unit 56.

Program storage unit 52 stores an execution program for workpiece machining (control program for machine tool 100) created by an operator of machine tool 100. An example of program storage unit 52 is flash memory.

Program execution unit 53 executes the execution program stored in program storage unit 52. Program execution unit 53 reads an instruction of the execution program and outputs a control signal to each of tool spindle control unit 54, tool rest control unit 71, workpiece spindle control unit 55, and opposing workpiece spindle control unit 56.

In accordance with the control signal from program execution unit 53, tool spindle control unit 54 controls a tool spindle swivel motor 61 for causing tool spindle 41 to perform B-axis swiveling, a tool spindle feed motor 62 for causing tool spindle 41 to move in each of the X-axis direction, the Y-axis direction and the Z-axis direction, and a tool spindle rotation motor 63 for causing tool spindle 41 to rotate about rotation center axis 140.

In accordance with the control signal from program execution unit 53, tool rest control unit 71 controls a tool rest swivel motor 72 for causing tool rest 31 to swivel about swivel center axis 130, a tool rest feed motor 73 for causing tool rest 31 to move in each of the X-axis direction and the Z-axis direction, and actuator 74 for causing holder 36 to operate in the clamp state or in the unclamp state.

In accordance with the control signal from program execution unit 53, workpiece spindle control unit 55 controls a workpiece spindle rotation motor 64 for causing workpiece spindle 21 to rotate about rotation center axis 110. In accordance with the control signal from program execution unit 53, opposing workpiece spindle control unit 56 controls an opposing workpiece spindle rotation motor 65 for causing opposing workpiece spindle 26 to rotate about rotation center axis 120, and an opposing workpiece spindle feed motor 66 for causing opposing workpiece spindle 26 to move in the Z-axis direction.

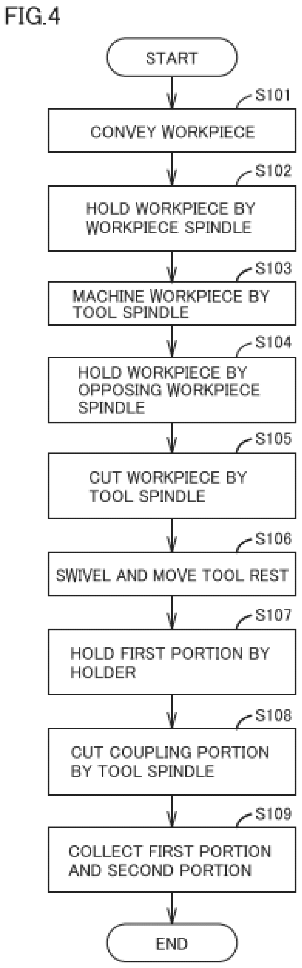

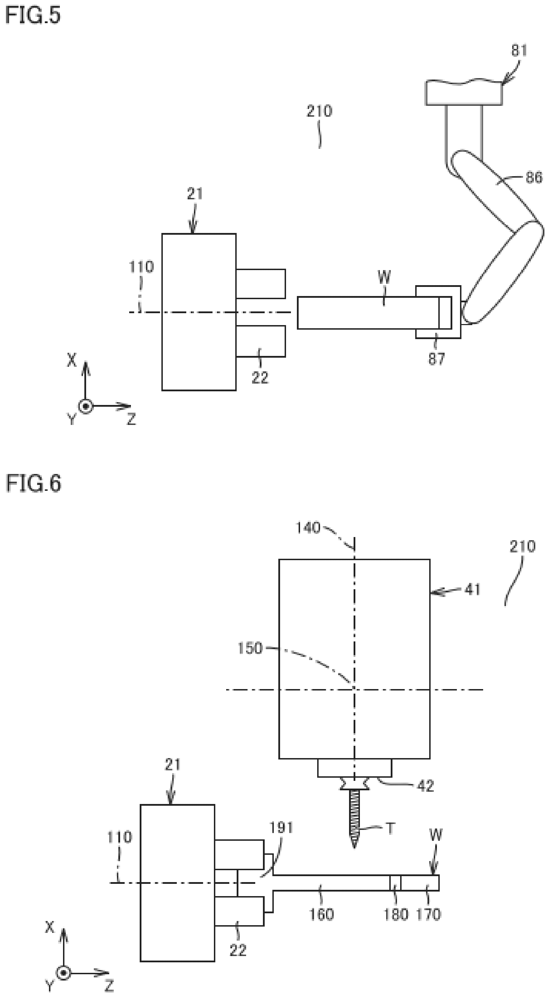

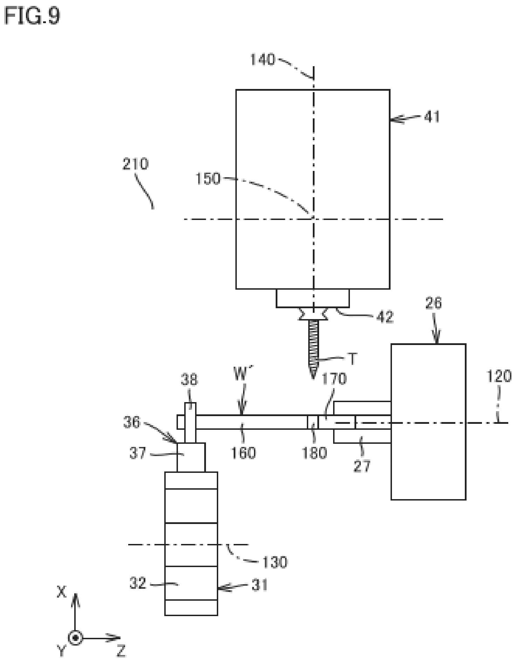

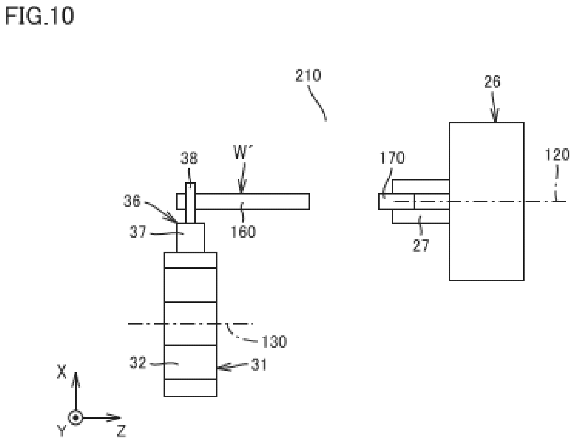

Fig. 4 is a flowchart showing a flow of workpiece machining using the machine tool in Fig. 1. Each of Figs. 5 to 10 is a front view schematically showing each step of workpiece machining using the machine tool in Fig. 1.

Referring to Figs. 1 to 10, controller 51 controls tool spindle 41 to machine workpiece W to obtain an intermediate machined workpiece W' including a first portion 160, a second portion 170, and a coupling portion 180 that couples first portion 160 and second portion 170, controls tool rest 31 to hold first portion 160 by holder 36, and controls tool spindle 41 to cut coupling portion 180, with first portion 160 held by holder 36.

A method for machining a workpiece according to the present embodiment includes: machining workpiece W to obtain intermediate machined workpiece W' including first portion 160, second portion 170, and coupling portion 180 that couples first portion 160 and second portion 170 (S103, S105); holding first portion 160 by holder 36 mounted on tool rest 31 (S107); and cutting coupling portion 180, with first portion 160 held by holder 36 (S108).

A control program according to the present embodiment is a control program for machine tool 100 including tool rest 31. The control program causes machine tool 100 to perform: machining workpiece W to obtain intermediate machined workpiece W' including first portion 160, second portion 170, and coupling portion 180 that couples first portion 160 and second portion 170 (S103, S105); holding first portion 160 by holder 36 mounted on tool rest 31 (S107); and cutting coupling portion 180, with first portion 160 held by holder 36 (S108).

As shown in Figs. 4 and 5, workpiece W is first conveyed into machining area 210 (S101). In this step, controller 51 controls robot arm 86 such that workpiece W placed on workpiece stocker 91 is gripped by hand 87. Workpiece W has a columnar shape. Controller 51 controls moving device 81 such that robot arm 86 moves from external area 220 to machining area 210.

As shown in Figs. 4 and 6, workpiece W is then held by workpiece spindle 21 (S102). In this step, controller 51 controls robot arm 86 such that workpiece W is disposed inside the plurality of claw portions 22. Controller 51 controls workpiece spindle 21 such that workpiece W is gripped by the plurality of claw portions 22. Workpiece W has one end 191 gripped by the plurality of claw portions 22. Controller 51 controls robot arm 86 such that gripping of workpiece W by hand 87 is released.

Then, workpiece W is machined by tool spindle 41 (S103). In this step, controller 51 controls tool spindle 41 to form first portion 160, second portion 170 and coupling portion 180 in workpiece W.

More specifically, tool spindle 41 is disposed to face workpiece W in the X-axis direction (up-down direction). The outer circumferential surface of workpiece W is machined into a flat surface by using a tool T such as a milling cutter held by tool spindle 41. Workpiece spindle 21 is rotated about rotation center axis 110 by 180°. Again, the outer circumferential surface of workpiece W is machined into a flat surface by using tool T such as a milling cutter held by tool spindle 41, thereby obtaining a flat plate shape in which the X-axis direction corresponds to a thickness direction. The flat plate portion of workpiece W is machined by using various types of tools T held by tool spindle 41, thereby forming first portion 160, second portion 170 and coupling portion 180 in workpiece W, with one end 191 left.

In the present embodiment, first portion 160 corresponds to a product portion. First portion 160 has a shape that corresponds to a final product after machining of workpiece W is completed. Second portion 170 corresponds to an unnecessary portion. Second portion 170 has a shape that does not correspond to the final product.

Second portion 170 is spaced apart from first portion 160. Second portion 170 is aligned with first portion 160 in the Z-axis direction with a spacing therebetween. Second portion 170 has such a shape that second portion 170 can be gripped by the plurality of claw portions 27 of opposing workpiece spindle 26. Second portion 170 has a flat plate shape. A volume of second portion 170 is smaller than a volume of first portion 160. Second portion 170 may have a frame shape surrounding an edge of first portion 160.

Coupling portion 180 extends between first portion 160 and second portion 170. Coupling portion 180 extends from the edge of first portion 160 and is connected to an edge of second portion 170. Coupling portion 180 is disposed between first portion 160 and second portion 170 in the Z-axis direction. One end of coupling portion 180 in the Z-axis direction is connected to first portion 160, and the other end in the Z-axis direction is connected to second portion 170. A cross-sectional area when coupling portion 180 is cut in a plane orthogonal to the Z-axis direction is equal to or less than a cross-sectional area when first portion 160 is cut in a plane orthogonal to the Z-axis direction at a position where coupling portion 180 is connected to first portion 160. A cross-sectional area when coupling portion 180 is cut in a plane orthogonal to the Z-axis direction is equal to or less than a cross-sectional area when second portion 170 is cut in a plane orthogonal to the Z-axis direction at a position where coupling portion 180 is connected to second portion 170.

First portion 160 and second portion 170 may be coupled by a plurality of coupling portions 180. In addition to tool T held by tool spindle 41, various types of tools held by tool rest 31 may be used in machining for forming first portion 160, second portion 170 and coupling portion 180 in workpiece W.

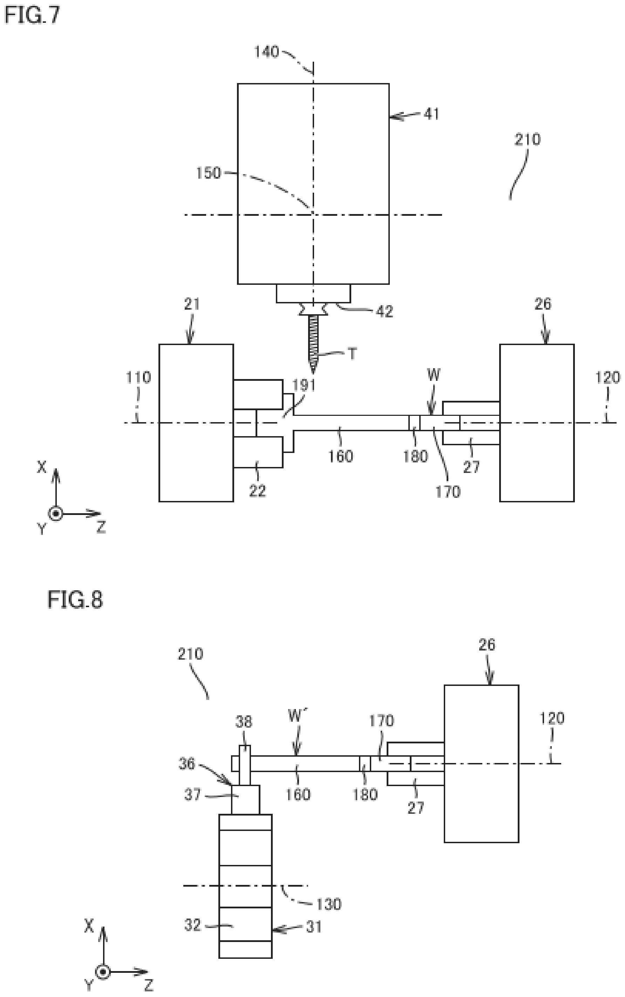

As shown in Figs. 4 and 7, workpiece W is then held by opposing workpiece spindle 26 (S104). In this step, controller 51 controls opposing workpiece spindle 26 such that second portion 170 of workpiece W is disposed inside the plurality of claw portions 27 and is gripped by the plurality of claw portions 22.

Then, the step of cutting workpiece W by tool spindle 41 is performed (S105). In this step, controller 51 controls tool spindle 41 such that a root portion of first portion 160 with respect to one end 191 of workpiece W is cut. One end 191 gripped by the plurality of claw portions 22 of workpiece spindle 21 is separated from first portion 160. As a result, intermediate machined workpiece W' including first portion 160, second portion 170 and coupling portion 180 is obtained.

As shown in Figs. 4 and 8, tool rest 31 is then swiveled and moved in the Z-axis direction and the X-axis direction (S106). Then, first portion 160 is held by holder 36 (S107).

In S106, controller 51 controls tool rest 31 such that swivel portion 32 swivels about swivel center axis 130 and holder 36 is indexed to a prescribed position. Controller 51 controls tool rest 31 such that tool rest 31 moves in the Z-axis direction and the X-axis direction and first portion 160 is disposed between the pair of gripping claws 38 of holder 36. In S107, controller 51 controls tool rest 31 such that first portion 160 is gripped by the pair of gripping claws 38.

As shown in Figs. 4, 9 and 10, the step of cutting coupling portion 180 by tool spindle 41 is then performed (S108). In this step, controller 51 controls tool spindle 41 such that coupling portion 180 is cut. Coupling portion 180 is cut, whereby first portion 160 is separated from second portion 170. During this time, first portion 160 is held by holder 36. Second portion 170 is held by opposing workpiece spindle 26.

As shown in Fig. 4, first portion 160 corresponding to a product portion and second portion 170 corresponding to an unnecessary portion are collected (S109).

In this step, controller 51 controls robot arm 86 such that first portion 160 is gripped by hand 87, and subsequently, controls tool rest 31 such that gripping of first portion 160 by the pair of gripping claws 38 is released. Controller 51 controls moving device 81 such that robot arm 86 moves from machining area 210 to external area 220. Controller 51 controls robot arm 86 such that first portion 160 gripped by hand 87 is placed on workpiece stocker 91.

Controller 51 controls robot arm 86 such that second portion 170 is gripped by hand 87, and subsequently, controls opposing workpiece spindle 26 such that gripping of second portion 170 by the plurality of claw portions 27 is released. Controller 51 controls moving device 81 such that robot arm 86 moves from machining area 210 to external area 220. Controller 51 controls robot arm 86 such that second portion 170 gripped by hand 87 is placed on workpiece stocker 91.

In the present embodiment, first portion 160 is held by holder 36 mounted on tool rest 31 in the step of cutting coupling portion 180 (S108), which makes it possible to more firmly hold intermediate machined workpiece W'. Thus, fall of intermediate machined workpiece W' or positional displacement of a machining point of intermediate machined workpiece W' caused by the tool held by tool spindle 41 can be prevented and the step of cutting coupling portion 180 can be smoothly performed.

In addition, second portion 170 is held by opposing workpiece spindle 26 in the step of cutting coupling portion 180, which makes it possible to even more firmly hold intermediate machined workpiece W'. In addition, first portion 160 is held by tool rest 31 and second portion 170 is held by opposing workpiece spindle 26 after the step of cutting coupling portion 180, which makes it possible to separately collect first portion 160 and second portion 170.

In addition, tool spindle 41 is disposed on the upper side relative to rotation center axis 120 of opposing workpiece spindle 26, and tool rest 31 is disposed on the lower side relative to rotation center axis 120 of opposing workpiece spindle 26. Thus, tool spindle 41 is less likely to interfere with tool rest 31 that holds intermediate machined workpiece W' during the step of cutting coupling portion 180, which makes it possible to suppress restriction of a movement range of tool spindle 41.

In addition, in the step of cutting coupling portion 180, first portion 160 held by tool rest 31 corresponds to a product portion, and second portion 170 held by opposing workpiece spindle 26 corresponds to an unnecessary portion. According to such a configuration, the shape or operation manner of the pair of gripping claws 38 of holder 36 is higher in design freedom than the shape or operation manner of the plurality of claw portions 27 of opposing workpiece spindle 26, which makes it easier to hold first portion 160 by holder 36 conforming to the product shape formed in first portion 160.

In addition, second portion 170 corresponding to an unnecessary portion is held by opposing workpiece spindle 26 in the step of cutting coupling portion 180. Thus, after machining for forming the product shape in first portion 160 is performed with second portion 170 held by opposing workpiece spindle 26, the step of cutting coupling portion 180 with first portion 160 and second portion 170 held by tool rest 31 and opposing workpiece spindle 26, respectively, can be smoothly performed.

Second portion 170 may be held by workpiece spindle 21 in the step of cutting coupling portion 180 shown in Fig. 2. Alternatively, in addition to first portion 160, second portion 170 may be held by tool rest 31 in the step of cutting coupling portion 180 shown in Fig. 2.

In addition, gripping claws 38 may be configured to grip intermediate machined workpiece W' in a direction of the smallest width of intermediate machined workpiece W' (thickness direction) when intermediate machined workpiece W' is held by holder 36 of tool rest 31. For example, in Fig. 2, gripping claws 38 may be configured such that gripping claws 38 come into contact with a surface plate portion of first portion 160 facing in the up-down direction. According to such a configuration, even in the case of intermediate machined workpiece W' in which second portion 170 has a frame shape surrounding the edge of first portion 160 and coupling portion 180 extends in the form of a branch from the edge of first portion 160 toward second portion 170, gripping claws 38 can hold both first portion 160 and second portion 170 by using a structure similar to the hand of the multi-articulated robot in above-described PTL 1 for gripping claws 38. Furthermore, when second portion 170 has a frame shape, a tool attachment that is detachably attached to tool spindle 41 and can rotate the tool about the direction (Y-axis direction) orthogonal to the direction of the rotation axis of tool spindle 41 (X-axis direction) as a rotation axis is also effectively used as means for separating coupling portion 180 with intermediate machined workpiece W' held by holder 36 of tool rest 31.

It should be understood that the embodiment disclosed herein is illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

12 cover body; 16 bed; 21 workpiece spindle; 22, 27 claw portion; 26 opposing workpiece spindle; 31 tool rest; 32 swivel portion; 36 holder; 37 holder base; 38 pair of gripping claws; 41 tool spindle; 42 spindle end surface; 51 controller; 52 program storage unit; 53 program execution unit; 54 tool spindle control unit; 55 workpiece spindle control unit; 56 opposing workpiece spindle control unit; 61 tool spindle swivel motor; 62 tool spindle feed motor; 63 tool spindle rotation motor; 64 workpiece spindle rotation motor; 65 opposing workpiece spindle rotation motor; 66 opposing workpiece spindle feed motor; 71 tool rest control unit; 72 tool rest swivel motor; 73 tool rest feed motor; 74 actuator; 80 workpiece transporting mechanism; 81 moving device; 86 robot arm; 87 hand; 91 workpiece stocker; 100 machine tool; 110, 120, 140 rotation center axis; 130, 150 swivel center axis; 160 first portion; 170 second portion; 180 coupling portion; 191 end; 210 machining area; 220 external area; T tool; W' intermediate machined workpiece; W workpiece.

## Claims

1. A machine tool comprising:
a tool rest having a holder that can hold a workpiece;
a tool spindle; and
a controller that controls the machine tool, wherein
the controller
controls the tool spindle to machine the workpiece to obtain an intermediate machined workpiece including a first portion, a second portion, and a coupling portion that couples the first portion and the second portion,
controls the tool rest to hold the first portion by the holder, and
controls the tool spindle to cut the coupling portion, with the first portion held by the holder.

2. The machine tool according to claim 1, further comprising a workpiece spindle, wherein
the controller controls the workpiece spindle to hold the workpiece by the workpiece spindle, and
the second portion is held by the workpiece spindle during cutting of the coupling portion.

3. The machine tool according to claim 1 or 2, wherein
the first portion corresponds to a product portion, and
the second portion corresponds to an unnecessary portion.

4. A method for machining a workpiece, the method comprising:
machining the workpiece to obtain an intermediate machined workpiece including a first portion, a second portion, and a coupling portion that couples the first portion and the second portion;
holding the first portion by a holder mounted on a tool rest; and
cutting the coupling portion, with the first portion held by the holder.

5. A control program for a machine tool including a tool rest, wherein
the control program causes the machine tool to perform:
machining a workpiece to obtain an intermediate machined workpiece including a first portion, a second portion, and a coupling portion that couples the first portion and the second portion;
holding the first portion by a holder mounted on the tool rest; and
cutting the coupling portion, with the first portion held by the holder.
